(19) Europäisches Patentamt / European Patent Office / Office européen des brevets

(11) **EP 2 381 514 B1**

(12) **EUROPEAN PATENT SPECIFICATION**

(45) Date of publication and mention
of the grant of the patent:
**21.08.2019 Bulletin 2019/34**

(21) Application number: **10733487.2**

(22) Date of filing: **20.01.2010**

(51) Int Cl.:
*H01M 4/38* *(2006.01)*      *C22C 19/00* *(2006.01)*
*C01B 3/00* *(2006.01)*      *C22C 1/02* *(2006.01)*
*C22C 19/03* *(2006.01)*      *C22F 1/10* *(2006.01)*
*H01M 10/34* *(2006.01)*

(86) International application number:
**PCT/JP2010/050630**

(87) International publication number:
**WO 2010/084880 (29.07.2010 Gazette 2010/30)**

(54) **HYDROGEN-ABSORBING ALLOY AND NICKEL-HYDROGEN STORAGE BATTERY**

WASSERSTOFFABSORBIERENDE LEGIERUNG UND
NICKEL-WASSERSTOFF-SPEICHERBATTERIE

ALLIAGE ABSORBANT L'HYDROGÈNE ET BATTERIE DE STOCKAGE NICKEL-HYDROGÈNE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.01.2009 JP 2009010969**

(43) Date of publication of application:
**26.10.2011 Bulletin 2011/43**

(73) Proprietor: **GS Yuasa International Ltd.
Kisshoin, Minami-ku,
Kyoto-shi, Kyoto 601-8520 (JP)**

(72) Inventors:
• **KANEMOTO, Manabu
Kyoto-shi
Kyoto 601-8520 (JP)**
• **OZAKI, Tetsuya
Kyoto-shi
Kyoto 601-8520 (JP)**
• **WATADA, Masaharu
Kyoto-shi
Kyoto 601-8520 (JP)**

(74) Representative: **Isarpatent
Patent- und Rechtsanwälte Behnisch Barth
Charles
Hassa Peckmann & Partner mbB
Postfach 44 01 51
80750 München (DE)**

(56) References cited:
**EP-A1- 2 214 229      WO-A1-2007/023901
WO-A1-2007/023901    WO-A1-2009/060666
JP-A- 11 323 469      JP-A- 2002 105 564
JP-A- 2002 105 564    JP-A- 2008 071 687
US-A1- 2001 041 292   US-A1- 2007 071 633**

• **Anonymous: "Group (periodic table) - Wikipedia,
the free encyclopedia", , 5 January 2015
(2015-01-05), pages 1-4, XP055160094, Retrieved
from the Internet:
URL:http://en.wikipedia.org/w/index.php?ti
tle=Group_(periodic_table)&printable=yes
[retrieved on 2015-01-06]**

**Description**

TECHNICAL FIELD

The present invention relates to a hydrogen-absorbing alloy and a nickel-metal hydride rechargeable battery comprising a negative electrode containing the same.

BACKGROUND ART

A nickel-metal hydride rechargeable battery known as a battery having a high energy density has been used conventionally widely for a substitution of a primary battery such as an alkaline manganese battery or the like, besides an electric power source of compact type electronic appliances such as a digital camera, and a notebook type personal computer, and it is expected that applications and demands for the nickel-metal hydride rechargeable battery are expanding in the future.

Incidentally, this kind of nickel-metal hydride rechargeable battery is constituted by including a nickel electrode containing a positive active material made of nickel hydroxide as a main component, a negative electrode made of a hydrogen-absorbing alloy as a main material, a separator, and an alkaline electrolyte solution. Particularly among these constituent materials of the battery, the hydrogen-absorbing alloy to be a main material of the negative electrode considerably affects the performances such as discharge capacity, and cycle performance, of the nickel-metal hydride rechargeable battery, and conventionally, various kinds of hydrogen-storage alloys have been investigated.

As the hydrogen-absorbing alloy, a rare earth-Mg-Ni based alloy capable of improving the discharge capacity more than an $AB_5$ type rare earth-Ni based alloy having a $CaCu_5$ type crystal structure is known and, for example, the following Patent Document 1 reports, as a rare earth-Mg-Ni based alloy capable of further improving the discharge capacity, a La-Mg-Ca-Ni$_9$ alloy having a PuNi$_3$ type crystal structure and containing Ca.

PRIOR ART DOCUMENT

PATENT DOCUMENT

Patent Document 1: Japanese Patent Application Laid-Open No. 11-217643

EP-A-2214229 describes a hydrogen absorbing alloy and a nickel-metal hydride battery incorporating a negative electrode comprising the hydrogen absorbing alloy.

WO-A-2007023901 describes a hydrogen absorbing alloy and a nickel-metal hydride battery incorporating a negative electrode comprising the hydrogen absorbing alloy.

JP-A-2002105564 describes a hydrogen storage alloy comprising Mg, Ni, rare earth elements, or the like.

US-A-2001041292 describes a hydrogen-absorbing alloy comprising, as a principal phase, at least one kind of phase selected from the group consisting of a first phase having a hexagonal crystal system (excluding a phase having a $CaCu_5$ type crystal structure) and a second phase having a rhombohedral crystal system, said hydrogen-absorbing alloy having a composition represented by the following general formula (1):

$$R_{1-a-b}Mg_aT_bNi_{Z-X-Y-\alpha}M1_XM2_YMn_\alpha \qquad (1)$$

wherein R is at least one kind of element selected from rare earth elements (which include Y); T is at least one element selected from the group consisting of Ca, Ti, Zr and Hf; M1 is at least one element selected from the group consisting of Co and Fe; M2 is at least one element selected from the group consisting of Al, Ga, Zn, Sn, Cu, Si, B, Nb, W, Mo, V, Cr, Ta, Li, P and S; and the atomic ratios of a, b, X, Y, $\alpha$ and Z are respectively a number satisfying the conditions of: $0.15 \le a \le 0.37$, $0 \le b \le 0.3$, $0 \le X \le 1.3$, $0 \le Y \le 0.5$, $0 \le \alpha < 0.135$, and $2.5 \le Z \le 4.2$

DISCLOSURE OF THE INVENTION

PROBLEMS TO BE SOLVED BY THE INVENTION

However, with respect to a Ca-containing La-Mg-Ni based hydrogen-absorbing alloy (hereinafter, also referred to as La-Mg-Ca-Ni based hydrogen-absorbing alloy in this specification), the hydrogen-absorbing capacity is increased due to the existence of calcium, and on the other hand, there is a problem that the durability is decreases as the amount of calcium to be added is increased and that the cycle life of a battery constituted by using the alloy is lowered.

In view of the problems of conventional techniques, an object of the present invention is to increase the discharge capacity of a hydrogen-absorbing alloy by addition of calcium and simultaneously to improve the cycle life performance in a nickel-metal hydride rechargeable battery using a La-Mg-Ni based hydrogen-absorbing alloy as an active material of a negative electrode.

MEANS FOR SOLVING THE PROBLEMS[0008]

The present inventors have made earnest investigations to solve the problems and have found that both the discharge capacity and the cycle life of a nickel-metal hydride rechargeable battery can be improved by using a hydrogen-absorbing alloy obtained by controlling the content of magnesium, the content of calcium, as well as the contents of other elements to be in prescribed ranges in a La-Mg-Ni based hydrogen-absorbing alloy as a negative electrode of a nickel-metal hydride rechargeable battery. The finding has led to completion of the present invention.

That is, the present invention provides a hydrogen-absorbing alloy comprising a crystal phase including hexagonal $Ce_2Ni_7$ type crystal structure and/or a crystal phase including rhombohedral $Gd_2Co_7$ type crystal structure, the total content ratio of the $Ce_2Ni_7$ type crystal structure and the $Gd_2Co_7$ type crystal structure being 97% by mass or higher and 100% by mass or lower, the hydrogen-absorbing alloy being represented by the following general formula (1):

$$M1_uMg_vCa_wM2_xNi_yM3_z \dots \qquad (1)$$

wherein, M1 is one or more elements selected from the group consisting of Y, La, Ce, Pr, Nd, and Sm, and is preferably one or both of La and Nd; M2 is Ti or Zr; M3 is one or more elements selected from the group consisting of Cr, Zn, Al, Co, and Mn; u, v, w, x, y, and z are numbers in % by atom, satisfying, $u + v + w + x + y + z = 100$, $12 \leq u \leq 20$, $3.4 \leq v \leq 5.9$, $0.8 \leq w \leq 3.1$, $0 \leq x \leq 2$, $60 \leq y \leq 80$, $0 \leq z \leq 2$, $0 \leq (x+z) \leq 5$, and $3.2 \leq (y+z)/(u+v+w+x) \leq 3.4$.

Further, the present invention also provides a nickel-metal hydride rechargeable battery including a negative electrode containing the hydrogen-absorbing alloy.

According to the hydrogen-absorbing alloy and nickel-metal hydride rechargeable battery of the present invention, it is made possible to give a nickel-metal hydride rechargeable battery with high capacity and excellent cycle life performance by controlling the composition of the general formula (1) to be the following conditions: that is, the composition contains M1 of $12 \leq u \leq 20\%$ by atom, magnesium of $3.4 \leq v \leq 5.9\%$ by atom, calcium of $0.8 \leq w \leq 3.1\%$ by atom, M2 of $0 \leq x \leq 2\%$ by atom, nickel of $60 \leq y \leq 80\%$ by atom, M3 of $0 \leq z \leq 2\%$ by atom, and the total of M2 element and M3 element in a range of $0 \leq (x+z) \leq 5\%$ by atom, and the ratio $(y+z)$ of the total element number of Ni and M3 to the total element number $(u+v+w+x)$ of M1, Mg, Ca, and M2 is adjusted to 3.2 or higher and 3.4 or lower.

EFFECTS OF THE INVENTION

As described above, according to the hydrogen-absorbing alloy and nickel-metal hydride rechargeable battery of the present invention, even in the case where a La-Mg-Ca-Ni based hydrogen-absorbing alloy with increased hydrogen-absorbing capacity by existence of calcium is used as an active material of a negative electrode, there is an effect that a nickel-metal hydride rechargeable battery excellent in the cycle life can be provided.

BRIEF DESCRIPTION OF THE DRAWINGS

[Fig. 1] A graph obtained by plotting the content of Ca in the x-axis and the cycle life in the y-axis, showing the results of Examples 1 to 3 and Comparative Examples 1 to 11 of Table 1.

[Fig. 2] A graph obtained by plotting the content of Ca in the x-axis and the discharge capacity in the y-axis, showing the results of Examples 1 to 3 and Comparative Examples 1 to 11 of Table 1.

[Fig. 3] A graph obtained by plotting the B/A ratio in the x-axis and the cycle life in the y-axis, showing the results of Examples 3, 9, and 11 and Comparative Examples 8 and 11.

MODES FOR CARRYING OUT THE INVENTION

The hydrogen-absorbing alloy of the present invention is a hydrogen-absorbing alloy comprising a crystal phase including hexagonal $Ce_2Ni_7$ type crystal structure and/or a crystal phase including rhombohedral $Gd_2Co_7$ type crystal structure, the total content ratio of the $Ce_2Ni_7$ type crystal structure and the $Gd_2Co_7$ type crystal structure being 97% by mass or higher and 100% by mass or lower, the hydrogen-absorbing alloy being represented by the following general formula (1):

$$M1_uMg_vCa_wM2_xNi_yM3_z \dots \qquad (1)$$

wherein, M1 is one or more elements selected from the group consisting of Y, La, Ce, Pr, Nd, and Sm, and is preferably one or both of La and Nd; M2 is Ti or Zr; M3 is one or more elements selected from the group consisting of Cr, Zn, Al, Co, and Mn; u, v, w, x, y, and z are numbers in % by atom, satisfying, u + v + w + x + y + z = 100, $12 \le u \le 20$, $3.4 \le v \le 5.9$, $0.8 \le w \le 3.1$, $0 \le x \le 2$, $60 \le y \le 80$, $0 \le z \le 2$, $0 \le (x+z) \le 5$, and $3.2 \le (y+z)/(u+v+w+x) \le 3.4$. In the present invention, the nickel-metal hydride rechargeable battery includes a negative electrode containing the hydrogen-absorbing alloy with the constitution.

In addition, the hydrogen-absorbing alloy of the present invention may include designations and alterations by adding trace amounts of various kinds of elements while having a chemical composition satisfying the general formula (1). For example, impurity elements contained in raw materials may be contained in a little amount in the chemical composition of the alloy.

In general, a La-Mg-Ni based hydrogen-absorbing alloy contains the M1 element, Mg, and Ni and means an alloy in which the number of Ni atom is more than three times and less than five times as much as the total of the number of rare earth element and the number of Mg atom, and the hydrogen-absorbing alloy of the present invention may further contain Ca and at the same time, satisfy that the ratio (hereinafter, also referred to as B/A ratio) of the total number of Ni atom and M3 element (generically refers to as B side elements) to the total number of the M1 element, Mg atom, Ca atom, and M2 element (generically refers to as A side elements) is 3.2 or higher and 3.4 or lower.

M1 is rare earth element, and generally the rare earth elements include scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu). M1 in the present invention is one or more elements selected from the group consisting of Y, La, Ce, Pr, Nd, and Sm is preferably one or both of La and Nd.

In terms of further improvement of the discharge capacity of the nickel-metal hydride rechargeable battery, the content of La is preferably 4.7% by atom or higher and more preferably 4.7% by atom or higher and 18.37% by atom or lower in the hydrogen-absorbing alloy of the present invention.

Also, in terms of further improvement of the cycle life performance of the nickel-metal hydride rechargeable battery, the content of Ce is preferably 2.3% by atom or lower in the hydrogen-absorbing alloy of the present invention. It is because if the content of Ce is within the range, the strains of crystal lattices caused at the time of hydrogen absorption and desorption are suppressed and pulverization can be suppressed. Consequently, control of the content of Ce to be 2.3% by atom or lower further improves the cycle life performance of the battery.

The M2 element includes elements forming stable hydrides but excludes rare earth elements. Generally, the elements forming stably hydrides are Group 3A, Group 4A, and Group 5A elements and Pd. The M2 element is an element which can replace the M1 element, Mg, or Ca in the crystal structure of the alloy. In the present invention, M2 is Ti or Zr. Described are other elements including Hf, V, Nb, and Ta, which can also serve as M2.

The amount of the M2 element to be added can be adjusted within a range in which the action of the M1 element, Mg, or Ca is not cancelled. Therefore, the amount to be added may be zero or in the case of addition, the amount is preferably as small as possible. Concretely, it is preferable that the total amount of the M2 element and the M3 element is about 5% by atom or lower. With respect to the M2 element, in the general formula (1), the content satisfies $0 \le x \le 2$; preferably the content satisfies $0 \le x \le 1$; and more preferably the content satisfies $0 \le x \le 0.2$ since the effects of the present invention are more reliably obtained.

The M3 element includes elements forming unstable hydrides but excludes Ni. Generally, the elements forming unstably hydrides are, in other words, elements hard to form hydrides and examples thereof include Group 6A, Group 7A, Group 8, Group 1B, Group 2B, and Group 3B elements (excluding Pd). The M3 element is an element which can replace Ni in the crystal structure of the alloy. In the present invention, M3 is one or more elements selected from the group consisting of Cr, Mn, Co, Zn, and Al. Described are other elements Fe and Cu which can also serve as M3.

The amount of the M3 element to be added can be adjusted within a range in which the action of Ni is not cancelled. Therefore, the amount to be added may be zero or in the case of addition, the amount is preferably as small as possible. Concretely, it is preferable that the total amount of the M2 element and the M3 element is about 5% by atom or lower. With respect to the M3 element, in the general formula (1), the content satisfies $0 \le z \le 2$; preferably the content satisfies $0 \le z \le 1.7$; more preferably the content satisfies $0 \le z \le 1$; furthermore preferably the content satisfies $0 \le z \le 0.7$; and even more preferably the content satisfies $0 \le z \le 0.2$ since the effects of the present invention are more reliably obtained.

In addition, some elements as the M3 element have a reason to be added positively. For example, Cr, Zn and Al cause an action of suppressing pulverization of the alloy, so that in the general formula (1), these elements are added preferably in a range such that the z value becomes 1 or lower and more preferably in a range such that the z value becomes 0.7 or lower. With respect to Al, it is preferable to control the z value to be 0.6 or lower. It is because if the amount of Al to be added is controlled to be 0.6 or lower, segregation of Al can be suppressed and the cycle life performance can furthermore be improved. Herein, the phrase that the z value is 1, 0.7, and 0.6 means the content in the alloy is 1% by atom, 0.7% by atom, and 0.6% by atom, respectively.

Additionally, a method for determining " a range in which the action is not cancelled" may be a method for actually producing alloys and confirming the presence or absence of the effects of the present invention in the same manner as in examples in the present specification with use of these alloys or a method for estimating the presence or absence of the effects of the present invention by analyzing the crystal structure in the stage where the alloys are produced and determining whether or not the ratios of the crystal phases contained in these alloys are within the preferable ranges.

In the general formula (1), with respect to u denoting the number of the M1 element, x denoting the number of the M2 element, y denoting the number of Ni atom, and z denoting the number of the M3 element, these values are not particularly limited as long as these values satisfy the relational expressions; however, the values satisfy $12 \leq u \leq 20$; $0 \leq x \leq 2$; $60 \leq y \leq 80$; and $0 \leq z \leq 2$.

Further, a range for u is preferably $15.8 \leq u \leq 18.4$, more preferably $15.8 \leq u \leq 17.3$, and furthermore preferably $15.81 \leq u \leq 17.21$; a range for v is preferably $3.49 \leq v \leq 5.81$; a range for w is preferably $0.93 \leq w \leq 3.0$, more preferably $0.93 \leq w \leq 2.79$, and furthermore preferably $0.93 \leq w \leq 2.3$; a range for x is preferably $0 \leq x \leq 1$; and a range for y is preferably $71.1 \leq y \leq 77.3$, and more preferably $73.1 \leq y \leq 76.3$.

Moreover, since the cycle life performance becomes particularly excellent, the range of B/A ratio, that is, a value represented by $(y+z)/(u+v+w+x)$ in the general formula (1) is preferably 3.25 or higher and 3.35 or lower.

Use of the La-Mg-Ca-Ni based hydrogen-absorbing alloy having such a composition as a negative electrode gives a nickel-metal hydride rechargeable battery having high discharge capacity of the hydrogen-absorbing alloy and excellent in the cycle performance.

Also, the content of praseodymium in the hydrogen-absorbing alloy of the present invention is preferably 1.1% by atom or higher and 7.0% by atom or lower and more preferably 3.0% by atom or higher and 5.0% by atom or lower. Use of the hydrogen-absorbing alloy satisfying the content of praseodymium within the range provides an effect of further improving the cycle life performance.

Further, the hydrogen-absorbing alloy of the present invention is a rare earth-Mg-Ni based hydrogen-absorbing alloy having two or more crystal phases including crystal structures different from one another, and preferably a rare earth-Mg-Ni based hydrogen-absorbing alloy having these two or more crystal phases layered in the c-axis direction of the crystal structures.

Generally, the examples of the crystal phases include a crystal phase including rhombohedral $La_5MgNi_{24}$ type crystal structure (hereinafter, also simply referred to as $La_5MgNi_{24}$ phase); a crystal phase including hexagonal $Pr_5Co_{19}$ type crystal structure (hereinafter, also simply referred to as $Pr_5Co_{19}$ phase); a crystal phase including rhombohedral $Ce_5Co_{19}$ type crystal structure (hereinafter, also simply referred to as $Ce_5Co_{19}$ phase); a crystal phase including hexagonal $Ce_2Ni_7$ type crystal structure (hereinafter, also simply referred to as $Ce_2Ni_7$ phase); a crystal phase including rhombohedral $Gd_2Co_7$ type crystal structure (hereinafter, also simply referred to as $Gd_2Co_7$ phase); a crystal phase including hexagonal $CaCu_5$ type crystal structure (hereinafter, also simply referred to as $CaCu_5$ phase); a crystal phase including cubic $AuBe_5$ type crystal structure (hereinafter, also simply referred to as $AuBe_5$ phase); and a crystal phase including rhombohedral $PuNi_3$ type crystal structure (hereinafter, also simply referred to as $PuNi_3$ phase).

In the present invention, the hydrogen-absorbing alloy comprises $Ce_2Ni_7$ phase and/or $Gd_2Co_7$ phase. The hydrogen-absorbing alloy may also have one or more phases selected from the group consisting of $La_5MgNi_{24}$ phase, $Pr_5Co_{19}$ phase, $Ce_5Co_{19}$ phase. The hydrogen-absorbing alloy having these crystal phases has excellent characteristics such that the strains are hardly caused since the difference of the expansion and contraction ratios between the crystal phases is small and that deterioration scarcely occurs at the time of repeating absorption and desorption of hydrogen.

Herein, the $La_5MgNi_{24}$ type crystal structure is a crystal structure formed by inserting 4 units of $AB_5$ unit between $A_2B_4$ units; the $Pr_5Co_{19}$ type crystal structure is a crystal structure formed by inserting 3 units of $AB_5$ unit between $A_2B_4$ units; the $Ce_5Co_{19}$ type crystal structure is a crystal structure formed by inserting 3 units of $AB_5$ unit between $A_2B_4$ units; the $Ce_2Ni_7$ type crystal structure is a crystal structure formed by inserting 2 units of $AB_5$ unit between $A_2B_4$ units; the $Gd_2Co_7$ type crystal structure is a crystal structure formed by inserting 2 units of $AB_5$ unit between $A_2B_4$ units; and the $AuBe_2$ type crystal structure is a crystal structure constituted solely by $A_2B_4$ unit.

In this connection, the $A_2B_4$ unit is a structure unit having a hexagonal $MgZn_2$ type crystal structure (C14 structure) or a hexagonal $MgCu_2$ type crystal structure (C15 structure) and the $AB_5$ unit is a structure unit having a hexagonal $CaCu_5$ type crystal structure.

In the case where the crystal phases are layered, the layering order of the respective crystal phases is not particularly limited and specified crystal phases in combination may be layered repeatedly with periodicity or the respective crystal phases may be layered at random without periodicity.

Described is that the content of the crystal phase having $La_5MgNi_{24}$ type crystal structure is 0 to 50% by mass; the content of the crystal phase having $Pr_5Co_{19}$ type crystal structure is 0 to 80% by mass; the content of the crystal phase having $Ce_5Co_{19}$ type crystal structure is 0 to 80% by mass.

In the present invention, the hydrogen-absorbing alloy of the present invention is to include $Ce_2Ni_7$ phase and/or

$Gd_2Co_7$ phase as a main phase. The main phase means a crystal phase having the highest content ratio (unit: % by mass) among the crystal phases contained in the alloy. The contents of the $Ce_2Ni_7$ phase and the $Gd_2Co_7$ phase in the alloy can remarkably be increased by allowing the alloy to satisfy the composition represented by the general formula (1) of the present invention. The cycle life performance of the battery tends to be increased by including either one of the phases as a main phase.

In the hydrogen-absorbing alloy of the present invention, the content of either one of the $Ce_2Ni_7$ phase and the $Gd_2Co_7$ phase is 97% by mass or higher and 100% by mass or lower. It is because considerable improvement of the cycle life performance can be confirmed. Although the mechanism of the improvement is not made clear, it is supposedly attributed to the fact that the crystal structure of the alloy becomes even. In the case where different crystal structures are mixed, it is supposed that pulverization is promoted due to the difference of the alteration degree of a-axis length among crystal lattices. On the other hand, in the case where the content of either one of the phases is 97% by mass or higher and 100% by mass or lower, it is supposed that this deterioration mechanism is inhibited and the cycle life performance can be further improved. Further, in the case where the content of either one of the $Ce_2Ni_7$ phase and the $Gd_2Co_7$ phase is 97% by mass or higher and 100% by mass or lower, an especially excellent effect can be exhibited.

In the present invention, in the hydrogen-absorbing alloy of the present invention, in terms of improvement of the cycle life performance, the total content ratio of the $Ce_2Ni_7$ phase and the $Gd_2Co_7$ phase is 97% by mass or higher and 100% by mass or lower.

Furthermore, the hydrogen-absorbing alloy of the present invention moreover preferably includes the $Ce_2Ni_7$ phase as a main phase rather than the $Gd_2Co_7$ phase as a main phase. It is because the cycle life performance can be further improved. The improvement of the cycle life performance is supposedly attributed to the fact that calcium element tends to be more evenly arranged in the $Ce_2Ni_7$ phase than in the $Gd_2Co_7$ phase.

Additionally, with respect to the crystal phases having the respective crystal structures, the crystal structures can be specified by carrying out x-ray diffractometry, for example, for pulverized alloy powder and analyzing the obtained x-ray pattern by Rietveld method.

Also, the layer of two or more crystal phases having crystal structures different from one another in the c-axis direction of the crystal structures can be confirmed by observing the lattice image of the alloy by using TEM.

Furthermore, the hydrogen-absorbing alloy is preferably an alloy having a hydrogen equilibrium pressure of 0.07 MPa or lower. In a conventional hydrogen-absorbing alloy, if the hydrogen equilibrium pressure is high, the alloy has characteristics such that the alloy hardly absorbs hydrogen and easily desorbs absorbed hydrogen and if the high rate performance of the hydrogen-absorbing alloy is heightened, hydrogen is easily self-desorbed.

Described is that in the rare earth-Mg-Ni based hydrogen-absorbing alloy obtained by layering two or more crystal phases having crystal structures different from one another, and particularly, the hydrogen-absorbing alloy having a content of the crystal phase having $CaCu_5$ type crystal structure of 15% by mass or lower, even if the hydrogen equilibrium pressure is set to be as low as 0.07 MPa or lower, favorable high rate performance can be obtained and a nickel-metal hydride rechargeable battery using the hydrogen-absorbing alloy as a negative electrode becomes excellent in high rate performance and hardly causes self-desorption (self-discharge in the case of a battery) of hydrogen. It is supposed that the diffusion property of hydrogen in the alloy is improved.

Additionally, the hydrogen equilibrium pressure means an equilibrium pressure (in desorption side) of H/M of 0.5 in the PCT curve (pressure-composition isothermal curve) at 80°C.

The hydrogen-absorbing alloy with such a constitution can be obtained by the following production method.

That is, a method for producing a hydrogen-absorbing alloy as one embodiment involves a melting step of melting alloy raw materials blended so as to give a prescribed composition ratio; a cooling step of cooling and solidifying the melted alloy raw materials; and an annealing step of annealing the cooled alloy in a temperature range of 860 to 1000°C under a pressurized inert gas atmosphere.

To describe the method more concretely, first, prescribed amounts of raw material ingots (alloy raw materials) are weighed based on the chemical composition of an intended hydrogen-absorbing alloy.

In the melting step, the alloy raw materials are put in a crucible and the alloy raw materials are heated at, for example, 1200 to 1600°C in an inert gas atmosphere or in vacuum using a high frequency melting furnace to be melted.

In the cooling step, the melted alloy raw materials are cooled and solidified. A cooling method to be employed may be a method of pouring the melted alloy materials into a casting die. The cooling speed to be employed may be preferably 10 K (Kelvin)/sec or higher and 500 K (Kelvin)/sec or lower.

In the annealing step, it is carried out by heating at 860 to 1000°C by using, for example, an electric furnace or the like under a pressurized inert gas atmosphere. The pressurizing condition is preferably 0.2 to 1.0 MPa (gauge pressure). Further, the treatment time in the annealing step is preferably 3 to 50 hours.

Owing to the annealing step, the strains of crystal lattices are removed and the hydrogen-absorbing alloy subjected to the annealing step finally becomes a hydrogen-absorbing alloy obtained by layering two or more crystal phases having crystal structures different from one another.

After a La-Mg-Ca-Ni based hydrogen-absorbing alloy containing Ca at a ratio of 0.8% by atom or higher and 3.1% by atom or lower is produced by the procedure, the hydrogen-absorbing alloy is pulverized and preferably used as a material for a negative electrode.

The pulverization of the hydrogen-absorbing alloy at the time of electrode production may be carried out either before or after annealing; however since the surface area becomes high due to the pulverization, it is preferable to carry out the pulverization after annealing in terms of prevention of the surface oxidation of the alloy. The pulverization is preferably carried out in an inert atmosphere for preventing the oxidation of the alloy surface.

In order to carry out pulverization, for example, mechanical pulverization or hydrogenation pulverization can be employed.

Next, an alkaline electrolyte solution constituting the nickel-metal hydride rechargeable battery of the present invention will be described.

The alkaline electrolyte solution to be used may be a solution containing at least any one of sodium ion, potassium ion, and lithium ion and having 9 mol/L or lower of the total ion concentration of the respective ions, and preferably 5.0 to 9.0 mol/L of the total ion concentration.

Further, the electrolyte solution may contain various kinds of additives for improving the anticorrosive property to the alloy, improving the overvoltage in the positive electrode, improving the corrosion resistance of the negative electrode, and improving the self-discharge. As the additives, oxides, hydroxides, and the like of yttrium, ytterbium, erbium, calcium, zinc, and the like may be used alone or in the form of a mixture of two or more of them.

On the other hand, the positive electrode of the nickel-metal hydride rechargeable battery is not particularly limited; however, in general, a positive electrode containing a nickel hydroxide composite oxide obtained by mixing nickel hydroxide as a main component with zinc hydroxide and cobalt hydroxide as a positive active material can be used preferably and a positive electrode containing the evenly dispersed nickel hydroxide composite oxide obtained by coprecipitation method can be used more preferably.

As the additives other than the nickel hydroxide composite oxide, cobalt hydroxide, cobalt oxide, or the like as a conductivity improving agent can be used and those in which the nickel hydroxide composite oxide is coated with cobalt hydroxide and those in which these nickel hydroxide composite oxides are partially oxidized by oxygen, or an oxygen-containing gas, or a chemical agent such as $K_2S_2O_8$ or hypochlorous acid.

Furthermore, as the additives, compounds of rare earth elements such as Y, and Yb, and Ca compounds can be used as a substance for improving the oxygen overvoltage. Since rare earth elements such as Y, and Yb are dissolved partially and arranged on the negative electrode surface, the effect of suppressing corrosion of the negative active material can also be expected.

In addition, the positive electrode and the negative electrode may contain, as other constituent components, a conductive agent, a binder, a thickener, and the like, besides the main constituent components.

The conductive agent is not particularly limited if it is an electron conductive material which does not cause a bad effect on the battery performance and may be generally contained as one of conductive materials or a mixture of two or more of conductive materials such as natural graphite (scaly graphite, flaky graphite, earthy graphite), artificial graphite, carbon black, acetylene black, Ketjen black, carbon whisker, carbon fibers, vapor grown carbon, metal (nickel, gold, and the like) powder, and metal fibers.

Among these substances, acetylene black is preferable as a conductive agent in terms of electron conductivity and coatability. The amount of the conductive agent to be added is preferably 0.1% by mass to 10% by mass based on the total weight of the positive electrode or the negative electrode. Particularly, in the case where acetylene black is used while pulverized into ultrafine particles having a diameter of 0.1 to 0.5 $\mu$m, the carbon amount to be needed can be saved and therefore, it is preferable.

A method for mixing these substances is preferably a method for giving a mixture as uniform as possible and a method using a powder mixing device such as a V-shaped mixing device, an S-shaped mixing device, an kneader, a ball mill, or a planet ball mill in a dry manner or a wet manner may be employed.

As the binder, generally, thermoplastic resins such as polytetrafluoroethylene (PTFE), polyethylene, and polypropylene; polymers having rubber elasticity such as ethylene-propylene-diene terpolymer (EPDM), sulfonated EPDM, styrene-butadiene rubber (SBR), and fluoro rubber may be used alone or in the form of a mixture of two or more of them. The amount of the binder to be added is preferably 0.1 to 3% by mass based on the total weight of the positive electrode or the negative electrode.

As the thickener, generally, polysaccharides such as carboxymethyl cellulose, methyl cellulose, and xanthane gum may be used alone or in the form of a mixture of two or more of them. The amount of the thickener to be added is preferably 0.1 to 0.3% by mass based on the total weight of the positive electrode or the negative electrode.

The positive electrode and the negative electrode are preferably produced by mixing the active materials, a conductive agent, and a binder with water or organic solvents such as alcohol, and toluene; applying the obtained mixed solution to current collectors; and drying the current collectors. The application method is preferably an application method using procedures such as roller coating using an applicator roll, screen coating, blade coating, spin coating, and bar coating in an arbitrary thickness and an arbitrary shape; however the method is not limited thereto.

As the current collectors, electron conductors which cause no adverse effect on the reception and donation of electrons from and to the active materials in a constituted battery can be used without any particular limitation. In terms of reduction resistance and oxidation resistance, materials preferably usable as the current collectors are nickel and steel sheets plated with nickel, and the shape to be preferably used may be a foamed body, a molded body of fiber groups, a three-dimensional substrate subjected to uneven processing, or a two-dimensional substrate such as a punched sheet. Further, the thickness of the current collectors is not also particularly limited and those with a thickness of 5 to 700 $\mu$m may be used preferably.

Among these current collectors, a material to be used preferably as a current collector for the positive electrode may be a foamed body with a porous structure excellent in current collecting property, which is made from a nickel material with excellent reduction resistance and oxidation resistance against alkali. Further, a material to be used preferably as a current collector for the negative electrode may be a punched sheet obtained by plating an iron foil economical and excellent in the conductivity with nickel for improving reduction resistance.

The punching diameter is preferably 2.0 mm or smaller and the aperture ratio is preferably 40% or higher and accordingly, the adhesive property between the negative active material and the current collector can be increased by even a small amount of binder.

Porous membranes, nonwoven fabrics, and the like showing excellent high rate performance may preferably be used alone or in combination of two or more of them for constituting a separator for a nickel-metal hydride rechargeable battery. Examples of the materials constituting the separator include polyolefin resins such as polyethylene, and polypropylene, and nylon.

The weight per unit surface area of the separator is preferably 40 g/m$^2$ to 100 g/m$^2$. If it is lower than 40 g/m$^2$, short-circuit may possibly be caused or self-discharge property may possibly be lowered and if it exceeds 100 g/m$^2$, the ratio of the separator per unit volume is increased and therefore, the battery's capacity tends to be lowered. The permeability of the separator is preferably 1 cm/sec to 50 cm/sec. If it is lower than 1 cm/sec, the inner pressure of the battery may possibly be increased and if it exceeds 50 cm/sec, short-circuit may possibly be caused or self-discharge property may possibly be lowered. The average fiber diameter of the separators is preferably 1 $\mu$m to 20 $\mu$m. If it is lower than 1 $\mu$m, the strength of the separator may possibly be lowered and the defective ratio may be increased in the assembly process of the battery and if it exceeds 20 $\mu$m, short-circuit may possibly be caused or self-discharge property may possibly be lowered.

Further, the separator is preferably subjected to hydrophilization treatment. For example, sulfonation treatment, corona treatment, fluorine gas treatment, or plasma treatment may be carried out for the surfaces of polyolefin resin fibers such as polypropylene or fibers having already been subjected to these treatments may be mixed to be used. Particularly, a separator subjected to sulfonation treatment has high capability of adsorbing impurities such as $NO_3$-, $NO_2$-, and $NH_3$- causing shuttle phenomenon and elements eluted from the negative electrode and thus has high self-discharge suppressing effect and is thus preferable.

A sealed type nickel-metal hydride rechargeable battery as one embodiment of the present invention is preferably produced by injecting the electrolyte solution before or after layering the positive electrode, the separator, and the negative electrode, and sealing the resulting unit with an outer casing. Furthermore, in a sealed type nickel-metal hydride rechargeable battery obtained by winding a power generating element constituted by layering the positive electrode and the negative electrode through the separator interposed therebetween, the electrolyte solution is preferably injected into the power generating element before or after the winding. A solution injection method may possibly be a method for injecting the solution under normal pressure and also a vacuum impregnation method, a pressure impregnation method, and a centrifugal impregnation method may also be employed. Moreover, examples of a material for the outer casing of the sealed type nickel-metal hydride rechargeable battery include iron or stainless steel plated with nickel, and polyolefin resins.

The constitution of the sealed type nickel-metal hydride rechargeable battery is not particularly limited and examples thereof include batteries having a positive electrode, a negative electrode, and a monolayer or multilayer separator such as a coin type battery, a button type battery, a prismatic battery, and a flat type battery, or cylindrical batteries having a positive electrode, a negative electrode, and a separator in a roll shape.

EXAMPLES

Hereinafter, the present invention will be described more concretely with reference to examples and comparative examples; however the present invention should not be limited to the following examples.

<Example 1>

(Production of positive electrode)

Ammonium sulfate and an aqueous sodium hydroxide solution were added to an aqueous solution obtained by dissolving nickel sulfate, zinc sulfate, and cobalt sulfate at a prescribed ratio to produce ammine complexes. While the reaction system being strongly stirred, sodium hydroxide was further added dropwise to control the pH of the reaction system to be 10 to 13 and spherical nickel hydroxide particles with high density to be a core layer matrix were synthesized in a manner of adjusting the mass ratio of nickel hydroxide : zinc hydroxide : cobalt hydroxide = 93 : 5 : 2.

The nickel hydroxide particles with high density were charged into the aqueous alkaline solution controlled to be a pH of 10 to 13 with sodium hydroxide and while the solution being stirred, an aqueous solution containing prescribed concentrations of cobalt sulfate and ammonia was added dropwise. During the time, an aqueous sodium hydroxide solution was added dropwise properly to keep the pH of the reaction bath in a range of 10 to 13. The pH was kept in a range of 10 to 13 for about 1 hour to form a surface layer including a Co-containing hydroxide mixture on the surfaces of the nickel hydroxide particles. The ratio of the surface layer of the hydroxide mixture was 4% by mass based on the core layer matrix particles of the hydroxide (hereinafter, simply referred to as core layer).

Further, the nickel hydroxide particles having the surface layer of the hydroxide mixture were charged into 30% by mass of an aqueous sodium hydroxide solution (10 mol/L) at 110°C and sufficiently stirred. Successively, $K_2S_2O_8$ in an excess amount based on equivalent hydroxide of cobalt contained in the surface layer was added and then generation of oxygen gas from the particle surfaces was confirmed. The active material particles were filtered and washed with water and dried. To the obtained active material particles, 0.2% by mass of an aqueous carboxymethyl cellulose (CMC) solution, 0.3% by mass of polytetrafluoroethylene (PTFE), and 2% by mass of $Yb_2O_3$ were added to obtain a paste with active material particles : CMC solute : PTFE : $Yb_2O_3$ = 97.5 : 0.2 : 0.3 : 2.0% by mass (solid matter ratio) and a nickel porous body having a density of 350 g/m was filled with the paste. Thereafter, the resulting body was dried at 80°C and then pressed into a prescribed thickness to obtain a nickel positive electrode plate with 2000 mAh.

(Production of negative electrode)

Prescribed amounts of raw material ingots (alloy raw material) with the chemical composition as shown in Table 1 were weighed and put into a crucible and heated at 1200°C to 1600°C under a reduced argon gas atmosphere by using a high frequency melting furnace to melt the materials. After the melting, the melted materials were cooled by using a water-cooled casting die to solidify the alloy.

Next, the obtained alloy ingot was heated at 930°C for 5 hours under an argon gas atmosphere pressurized to 0.2 MPa (gauge pressure, the same applies hereinafter) by using an electric furnace.

With respect to each of the obtained hydrogen-absorbing alloys, the equilibrium pressure at H/M = 0.5 of the PCT curve (pressure-composition isothermal curve) at 80°C by using a Sieverts PCT measurement apparatus (P73-07, manufactured by Suzuki Shokan Co., Ltd.) was measured.

Further, each of the hydrogen-absorbing alloys was pulverized into powders having an average particle size D50 of 50 μm and the obtained powders were subjected to x-ray diffractometry in condition of 40 kV and 100 mA (Cu bulb) using an x-ray diffraction apparatus (product number M06XCE, manufactured by Bruker AXS). Furthermore, analysis was carried out by Rietveld method (analysis soft: RIETAN 2000) to calculate the production ratio of crystal phases. The results are shown in Table 1.

Successively, the alloy powders, an aqueous styrene-butadiene copolymer (SBR) solution, and an aqueous methyl cellulose (MC) solution were mixed at a solid matter mass ratio of 99.0 : 0.8 : 0.2, respectively, to obtain a paste and the paste was applied to a punched steel sheet obtained by plating iron with nickel and dried at 80°C and thereafter, pressed into a prescribed thickness to give a negative electrode.

(Production of open type battery for evaluation)

Each of the electrodes (negative electrodes) produced as described above was sandwiched with positive electrodes through a separator interposed therebetween and these electrodes were fixed by bolts in a manner of applying pressure of 1 kgf/cm² to the electrodes to assemble an open type nickel-metal hydride rechargeable battery with excess positive electrode capacity. As the electrolyte solution, a mixed solution of 6.8 mol/L of a KOH solution and 0.8 mol/L of a LiOH solution was used.

(Measurement of maximum discharge capacity and cycle life performance)

In a water bath at 20°C, 150% of charge at 0.1 ItA (38 mA/g) and discharge having an end-of discharge voltage of -0.6 V (vs. Hg/HgO) in the negative electrode at 0.2 ItA were repeated 50 cycles. The maximum discharge capacity during the time was measured and at the same time, the number of times when the discharge capacity was 60% based on the maximum discharge capacity was measured as the cycle life. The results of the maximum discharge capacity and the cycle life are shown in Table 1. Additionally, the measurement of the cycle life performance was carried out in a water bath at 20°C under the condition of repeating 105% of charge at 1 ItA and discharge having an end-of discharge voltage of -0.6 V (vs. Hg/HgO) in the negative electrode at 1 ItA.

(Measurement of particle size retention ratio)

Alloy powders with an average particle size D50 of 50 $\mu$m were subjected to 3 cycles of hydrogen absorption and desorption at 80°C by using a Sieverts PCT measurement apparatus. The particle size was measured before and after the PCT measurement by using a particle size distribution measurement apparatus (MT 3000, manufactured by Micro Track Co., Ltd.) to determine the particle size retention ratio. The calculation expression was as follows.

$$\text{Particle size retention ratio (\%)} = (\text{average particle size D50 after}$$

$$\text{PCT measurement/average particle size D50 before PCT measurement})$$

$$\times 100.$$

The measurement results of particle size retention ratio are shown in Table 1.

<Examples 2 and 3 and Comparative Examples 1 to 11>

Open type batteries for evaluation were produced in the same manner as in Example 1, except that the chemical compositions of the raw material ingots were changed as shown in Table 1 and the same measurements were carried out. The results are shown collectively in Table 1.

[Table 1]

| | Alloy composition [% by atom] | | | | | | Ratio of crystal phases [% by mass] | | | | | | B/A ratio | Discharge capacity [mAh/g] | Particle size retention ratio [%] | Cycle life [cyc] |
|---|---|---|---|---|---|---|---|---|---|---|---|---|---|---|---|---|
| | La | Pr | Ca | Mg | Ni | Total | $Gd_2Co_7$ | $Ce_2Ni_7$ | $Ce_5Co_{19}$ | $PuNi_3$ | $CaCu_5$ | Total | | | | |
| Comparative Example 1 | 17.91 | 0.00 | 0.70 | 4.65 | 76.74 | 100 | 0 | 95 | 5 | 0 | 0 | 100 | 3.30 | 355 | 79 | 280 |
| Example 1 | 17.67 | 0.00 | 0.93 | 4.65 | 76.74 | 100 | 0 | 100 | 0 | 0 | 0 | 100 | 3.30 | 374 | 84 | 330 |
| Example 2 | 17.21 | 0.00 | 1.40 | 4.65 | 76.74 | 100 | 0 | 100 | 0 | 0 | 0 | 100 | 3.30 | 380 | 86 | 350 |
| Example 3 | 15.81 | 0.00 | 2.79 | 4.65 | 76.74 | 100 | 14 | 83 | 0 | 0 | 0 | 100 | 3.30 | 388 | 76 | 340 |
| Comparative Example 2 | 15.12 | 0.00 | 3.49 | 4.65 | 76.74 | 100 | 25 | 67 | 3 | 3 | 5 | 100 | 3.30 | 390 | 60 | 240 |
| Comparative Example 3 | 18.84 | 0.00 | 1.40 | 3.02 | 76.74 | 100 | 32 | 35 | 0 | 33 | 0 | 100 | 3.30 | 240 | 53 | 50 |
| Comparative Example 4 | 18.14 | 0.00 | 2.79 | 2.33 | 76.74 | 100 | 14 | 79 | 0 | 0 | 7 | 100 | 3.30 | 200 | 66 | 50 |
| Comparative Example 5 | 15.58 | 0.00 | 1.40 | 6.28 | 76.74 | 100 | 0 | 73 | 0 | 22 | 5 | 100 | 3.30 | 345 | 44 | 175 |
| Comparative Example 6 | 13.49 | 0.00 | 2.79 | 6.98 | 76.74 | 100 | 0 | 69 | 0 | 31 | 0 | 100 | 3.30 | 398 | 47 | 60 |
| Comparative Example 7 | 18.05 | 0.00 | 1.46 | 4.88 | 75.61 | 100 | 10 | 85 | 0 | 5 | 0 | 100 | 3.10 | 364 | 60 | 200 |
| Comparative Example 8 | 16.59 | 0.00 | 2.93 | 4.88 | 75.61 | 100 | 0 | 58 | 0 | 42 | 0 | 100 | 3.10 | 385 | 57 | 130 |
| Comparative Example 9 | 16.89 | 0.00 | 0.89 | 4.44 | 77.78 | 100 | 0 | 81 | 16 | 0 | 3 | 100 | 3.50 | 348 | 84 | 290 |
| Comparative Example 10 | 16.44 | 0.00 | 1.33 | 4.44 | 77.78 | 100 | 0 | 73 | 22 | 0 | 5 | 100 | 3.50 | 369 | 64 | 270 |
| Comparative Example 11 | 15.11 | 0.00 | 2.67 | 4.44 | 77.78 | 100 | 0 | 71 | 21 | 0 | 8 | 100 | 3.50 | 374 | 76 | 220 |

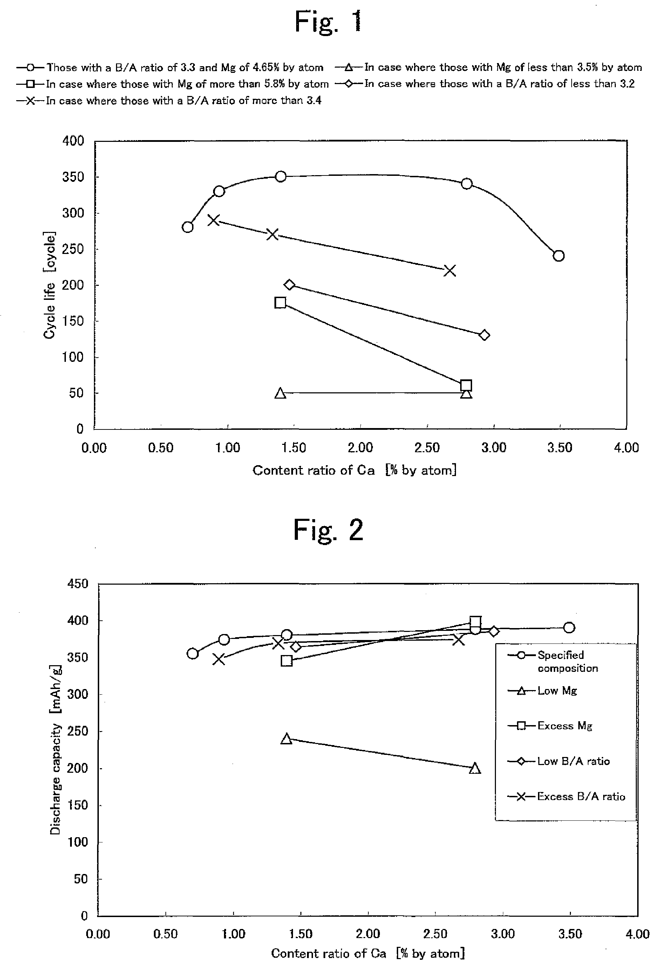

The results of Examples 1 to 3 and Comparative Examples 1 to 11 in Table 1 are shown in Fig. 1 as a graph obtained by plotting the content ratio of Ca in the x-axis and the number of cycles in the y-axis and in Fig. 2 as a graph obtained by plotting the content ratio of Ca in the x-axis and the discharge capacity in the y-axis.

According to the graphs shown in Fig. 1 and Fig. 2, in Comparative Examples 3 and 4 in which the content of Mg was lower than 3.5% by atom (the data plotted with $\triangle$ in the graph), neither the discharge capacity nor the cycle life was increased even if the content of Ca was increased; in Comparative Examples 5 and 6 in which the content of Mg exceeded 5.8% by atom (the data plotted with $\square$ in the graph), in Comparative Examples 7 and 8 in which the B/A ratio was lower than 3.2 (the data plotted with $\diamond$ in the graph), and in Comparative Examples 9 to 11 in which the B/A ratio exceeded 3.4 (the data plotted with $\times$ in the graph), it was confirmed that although the discharge capacity was increased by increasing the content of Ca, the cycle life was lowered.

On the other hand, among Comparative Examples 1 and 2 and Examples 1 to 3 in which the B/A satisfied $3.2 \leq B/A \leq 3.4$ and the content of Mg was 3.5% by atom or higher and lower than 5.8% by atom (the data plotted with $\bigcirc$ in the graph), it was confirmed that in Examples 1 to 3 in which the content of Ca satisfied 0.9% by atom or higher and 2.8% by atom or lower, even if the discharge capacity was increased by increasing the amount of Ca to be added, the cycle life was not lowered.

<Examples 4 to 10 and Comparative Examples 12 to 18>

Open type batteries for evaluation were produced in the same manner as in Example 1, except that the chemical compositions of the raw material ingots were changed as shown in Table 2 and the same measurements were carried out. The results are shown in Table 2.

[Table 2]

| | Alloy composition [% by atom] | | | | | | Ratio of crystal phases [% by mass] | | | | | | B/A ratio | Discharge capacity [mAh/g] | Particle size retention ratio [%] | Cycle life [cyc] |
|---|---|---|---|---|---|---|---|---|---|---|---|---|---|---|---|---|
| | La | Pr | Ca | Mg | Ni | Others | $Gd_2Co_7$ | $Ce_2Ni_7$ | $Ce_5Co_{19}$ | $PuNi_3$ | $CaCu_5$ | Total | | | | |
| Comparative Example 12 | 18.37 | 0.00 | 1.40 | 3.49 | 76.74 | 0.00 | 15 | 63 | 0 | 22 | 0 | 100 | 3.30 | 360 | 74 | 320 |
| Comparative Example 13 | 16.98 | 0.00 | 2.79 | 3.49 | 76.74 | 0.00 | 5 | 81 | 0 | 14 | 0 | 100 | 3.30 | 375 | 73 | 310 |
| Comparative Example 14 | 16.05 | 0.00 | 1.40 | 5.81 | 76.74 | 0.00 | 0 | 82 | 0 | 15 | 3 | 100 | 3.30 | 368 | 69 | 320 |
| Comparative Example 15 | 14.65 | 0.00 | 2.79 | 5.81 | 76.74 | 0.00 | 0 | 91 | 0 | 9 | 0 | 100 | 3.30 | 385 | 68 | 315 |
| Example 4 | 17.62 | 0.00 | 1.43 | 4.76 | 76.19 | 0.00 | 5 | 92 | 0 | 3 | 0 | 100 | 3.20 | 385 | 77 | 330 |
| Comparative Example 16 | 16.43 | 0.00 | 2.62 | 4.76 | 76.19 | 0.00 | 0 | 95 | 0 | 5 | 0 | 100 | 3.20 | 397 | 77 | 335 |
| Comparative Example 17 | 16.82 | 0.00 | 1.36 | 4.55 | 77.27 | 0.00 | 0 | 83 | 14 | 0 | 3 | 100 | 3.40 | 382 | 75 | 320 |
| Comparative Example 18 | 15.68 | 0.00 | 2.50 | 4.55 | 77.27 | 0.00 | 0 | 91 | 9 | 0 | 0 | 100 | 3.40 | 394 | 74 | 320 |
| Example 5 | 16.05 | 1.16 | 1.40 | 4.65 | 76.74 | 0.00 | 0 | 100 | 0 | 0 | 0 | 100 | 3.30 | 378 | 85 | 370 |
| Example 6 | 12.56 | 4.65 | 1.40 | 4.65 | 76.74 | 0.00 | 0 | 100 | 0 | 0 | 0 | 100 | 3.30 | 373 | 86 | 390 |
| Example 7 | 11.16 | 4.65 | 2.79 | 4.65 | 76.74 | 0.00 | 3 | 97 | 0 | 0 | 0 | 100 | 3.30 | 383 | 86 | 395 |
| Example 8 | 10.23 | 6.98 | 1.40 | 4.65 | 76.74 | 0.00 | 0 | 100 | 0 | 0 | 0 | 100 | 3.30 | 370 | 86 | 375 |
| Example 9 | 17.21 | 0.00 | 1.40 | 4.65 | 76.05 | Cr 0.70 | 0 | 100 | 0 | 0 | 0 | 100 | 3.30 | 378 | 88 | 380 |
| Example 10 | 17.21 | 0.00 | 1.40 | 4.65 | 76.05 | Zn 0.70 | 0 | 98 | 0 | 0 | 2 | 100 | 3.30 | 377 | 88 | 385 |

According to the results shown in Table 2, it was confirmed that even in Comparative Examples 12 to 15 in which the content of Mg was changed and also in Example 4 and Comparative Examples 16 to 18 in which the B/A ratio was changed, in the case where the discharge capacity was increased by increasing the amount of Ca to be added, the cycle life was hardly lowered.

Also, in Examples 5 to 8 in which praseodymium (Pr) was added, results of high discharge capacity and long cycle life were shown in all examples and it was confirmed that the discharge capacity and the cycle life were remarkably improved.

Further, in Examples 9 and 10 in which Cr or Zn was added, it was confirmed that the particle size retention ratio was high and pulverization was suppressed and that the cycle life was improved. It was supposed that the cycle life performance was improved due to improvement of the anticorrosive property of the alloys by addition of these elements.

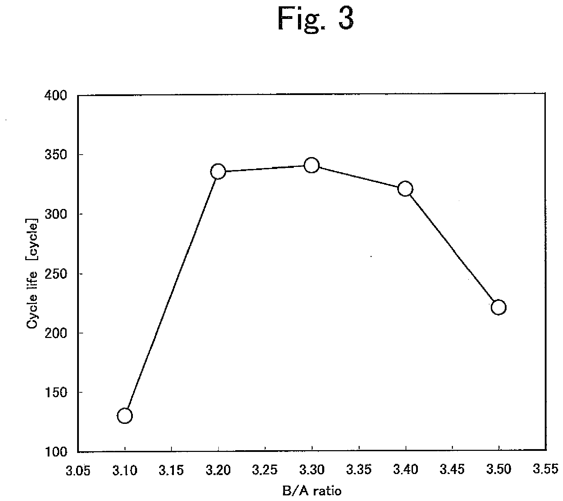

Further, a graph shown in Fig. 3 was obtained by plotting the B/A ratio in the x-axis and the cycle life in the y-axis for Example 3, Comparative Example 16, and Comparative Example 18 and Comparative Examples 8 and 11 in which the alloy compositions were approximate. From this graph, it was confirmed that the cycle life of alloys satisfying that the B/A ratio was in the range of 3.2 or higher and 3.4 or lower was considerably higher than the cycle life of alloys which failed to satisfy the range.

<Examples 11 to 12 and Comparative Examples 19 to 30>

Open type batteries for evaluation were produced in the same manner as in Example 1, except that the chemical compositions of the raw material ingots were changed as shown in Table 3 and the same measurements were carried out. The results are shown in Table 3 and Table 4.

[Table 3]

| | Alloy composition [% by atom] | | | | | | | | | | | | | |
| | M1 | | | | | Ca | Mg | M2 | | Ni | M3 | | | Total |
| | La | Nd | Y | Ce | Sm | | | Ti | Zr | | Co | Mn | Al | |
| Comparative Example 19 | 9.3 | 7.0 | 0.0 | 0.0 | 0.0 | 3.0 | 4.0 | 0.0 | 0.0 | 76.7 | 0.0 | 0.0 | 0.0 | 100 |
| Comparative Example 20 | 13.7 | 0.0 | 2.3 | 0.0 | 0.0 | 2.3 | 4.7 | 0.0 | 0.2 | 76.7 | 0.0 | 0.0 | 0.0 | 100 |
| Comparative Example 21 | 13.7 | 0.0 | 2.3 | 0.0 | 0.0 | 2.3 | 4.7 | 0.2 | 0.0 | 76.7 | 0.0 | 0.0 | 0.0 | 100 |
| Comparative Example 22 | 16.3 | 0.0 | 0.0 | 0.0 | 0.0 | 2.3 | 4.7 | 0.0 | 0.0 | 76.5 | 0.0 | 0.0 | 0.2 | 100 |
| Comparative Example 23 | 11.4 | 4.5 | 0.0 | 0.0 | 0.0 | 2.3 | 4.5 | 0.0 | 0.0 | 75.7 | 0.6 | 0.5 | 0.6 | 100 |
| Comparative Example 24 | 14.0 | 0.0 | 2.3 | 0.0 | 0.0 | 2.3 | 4.7 | 0.0 | 0.0 | 76.7 | 0.0 | 0.0 | 0.0 | 100 |
| Comparative Example 25 | 11.6 | 2.3 | 2.3 | 0.0 | 0.0 | 2.3 | 4.7 | 0.0 | 0.0 | 76.7 | 0.0 | 0.0 | 0.0 | 100 |
| Comparative Example 26 | 16.3 | 0.0 | 0.0 | 0.0 | 0.0 | 2.3 | 4.7 | 0.0 | 0.0 | 76.7 | 0.0 | 0.0 | 0.0 | 100 |
| Comparative Example 27 | 11.6 | 4.7 | 0.0 | 0.0 | 0.0 | 2.3 | 4.7 | 0.0 | 0.0 | 76.7 | 0.0 | 0.0 | 0.0 | 100 |
| Comparative Example 28 | 9.3 | 7.0 | 0.0 | 0.0 | 0.0 | 2.3 | 4.7 | 0.0 | 0.0 | 76.7 | 0.0 | 0.0 | 0.0 | 100 |
| Example 11 | 4.7 | 11.6 | 0.0 | 0.0 | 0.0 | 2.3 | 4.7 | 0.0 | 0.0 | 76.7 | 0.0 | 0.0 | 0.0 | 100 |
| Example 12 | 0.0 | 16.3 | 0.0 | 0.0 | 0.0 | 2.3 | 4.7 | 0.0 | 0.0 | 76.7 | 0.0 | 0.0 | 0.0 | 100 |

(continued)

| | Alloy composition [% by atom] | | | | | | | | | | | | | |
| --- | --- | --- | --- | --- | --- | --- | --- | --- | --- | --- | --- | --- | --- | --- |
| | M1 | | | | | Ca | Mg | M2 | | Ni | M3 | | | Total |
| | La | Nd | Y | Ce | Sm | | | Ti | Zr | | Co | Mn | Al | |
| Comparative Example 29 | 14.0 | 0.0 | 0.0 | 2.3 | 0.0 | 2.3 | 4.7 | 0.0 | 0.0 | 76.7 | 0.0 | 0.0 | 0.0 | 100 |
| Comparative Example 30 | 14.0 | 0.0 | 0.0 | 0.0 | 2.3 | 2.3 | 4.7 | 0.0 | 0.0 | 76.7 | 0.0 | 0.0 | 0.0 | 100 |

[Table 4]

| | Ratio of crystal phases [% by mass] | | | | | | | | | B/A ratio | Discharge capacity [mAh/g] | Cycle life [cyc] |
|---|---|---|---|---|---|---|---|---|---|---|---|---|
| | $Ce_2Ni_7$ | $Gd_2Co_7$ | $Ce_5Co_{19}$ | $Pr_5Co_{19}$ | $La_5MgNi_{24}$ | $CaCu_5$ | $PuNi_3$ | $AuBe_5$ | Total | | | |
| Comparative Example 19 | 15 | 72 | 0 | 0 | 0 | 0 | 13 | 0 | 100 | 3.3 | 380 | 345 |
| Comparative Example 20 | 82 | 0 | 13 | 5 | 0 | 0 | 0 | 0 | 100 | 3.3 | 382 | 350 |
| Comparative Example 21 | 85 | 0 | 13 | 2 | 0 | 0 | 0 | 0 | 100 | 3.3 | 385 | 370 |
| Comparative Example 22 | 96 | 0 | 2 | 2 | 0 | 0 | 0 | 0 | 100 | 3.3 | 375 | 385 |
| Comparative Example | 92 | 3 | 0 | 0 | 0 | 0 | 5 | 1 | 100 | 3.4 | 378 | 310 |
| Comparative Example 24 | 85 | 0 | 12 | 3 | 0 | 0 | 0 | 0 | 100 | 3.3 | 385 | 375 |
| Comparative Example 25 | 87 | 0 | 10 | 3 | 0 | 0 | 0 | 0 | 100 | 3.3 | 385 | 365 |
| Comparative Example 26 | 90 | 4 | 0 | 2 | 0 | 0 | 4 | 0 | 100 | 3.3 | 386 | 335 |
| Comparative Example 27 | 93 | 0 | 0 | 3 | 0 | 0 | 4 | 0 | 100 | 3.3 | 385 | 350 |
| Comparative Example 28 | 77 | 17 | 0 | 0 | 0 | 0 | 6 | 0 | 100 | 3.3 | 387 | 380 |
| Example 11 | 91 | 9 | 0 | 0 | 0 | 0 | 0 | 0 | 100 | 3.3 | 376 | 400or more |
| Example 12 | 97 | 3 | 0 | 0 | 0 | 0 | 0 | 0 | 100 | 3.3 | 349 | 400or more |
| Comparative Example 29 | 93 | 2 | 2 | 0 | 0 | 0 | 3 | 0 | 100 | 3.3 | 377 | 315 |
| Comparative Example 30 | 71 | 22 | 0 | 0 | 0 | 3 | 4 | 0 | 100 | 3.3 | 373 | 360 |

As shown in Table 3 and Table 4, it was confirmed that excellent effects were exhibited on a nickel-metal hydride rechargeable battery using the hydrogen-absorbing alloy with the composition satisfying the general formula (1) of the present invention in terms of both discharge capacity and cycle life performance.

**Claims**

1. A hydrogen-absorbing alloy comprising a crystal phase including hexagonal $Ce_2Ni_7$ type crystal structure and/or a crystal phase including rhombohedral $Gd_2Co_7$ type crystal structure, the total content ratio of the $Ce_2Ni_7$ type crystal structure and the $Gd_2Co_7$ type crystal structure being 97% by mass or higher and 100% by mass or lower, the hydrogen-absorbing alloy being represented by the following general formula (1):

$$M1_u Mg_v Ca_w M2_x Ni_y M3_z \ldots \qquad (1)$$

wherein, M1 is one or more elements selected from the group consisting of Y, La, Ce, Pr, Nd, and Sm, and is preferably one or both of La and Nd; M2 is Ti or Zr; M3 is one or more elements selected from the group consisting of Cr, Zn, Al, Co, and Mn; u, v, w, x, y, and z are numbers in % by atom, satisfying, $u + v + w + x + y + z = 100$, $12 \leq u \leq 20$, $3.4 \leq v \leq 5.9$, $0.8 \leq w \leq 3.1$, $0 \leq x \leq 2$, $60 \leq y \leq 80$, $0 \leq z \leq 2$, $0 \leq (x+z) \leq 5$, and $3.2 \leq (y+z)/(u+v+w+x) \leq 3.4$.

2. The hydrogen-absorbing alloy according to claim 1, wherein w in the general formula (1) satisfies $0.93 \leq w \leq 3.1$.

3. The hydrogen-absorbing alloy according to claim 1, wherein w in the general formula (1) satisfies $0.93 \leq w \leq 3.0$.

4. The hydrogen-absorbing alloy according to any one of claims 1 to 3, wherein v in the general formula (1) satisfies $3.49 \leq v \leq 5.81$.

5. The hydrogen-absorbing alloy according to any one of claims 1 to 4, wherein x in the general formula (1) satisfies $0 \leq x \leq 0.2$.

6. The hydrogen-absorbing alloy according to any one of claims 1 to 5, wherein z in the general formula (1) satisfies $0 \leq z \leq 1.7$.

7. The hydrogen-absorbing alloy according to any one of claims 1 to 6 comprising 4.7% by atom or higher and 18.37% by atom or lower of La.

8. The hydrogen-absorbing alloy according to any one of claims 1 to 7 comprising Ce in a ratio of 0% by atom or higher and 2.3% by atom or lower.

9. The hydrogen-absorbing alloy according to any one of claims 1 to 8 comprising Al in a ratio of 0% by atom or higher and 0.6% by atom or lower.

10. A nickel-metal hydride rechargeable battery comprising a negative electrode containing the hydrogen-absorbing alloy according to any one of claims 1 to 9.

**Patentansprüche**

1. Wasserstoffabsorbierende Legierung, umfassend eine Kristallphase mit hexagonaler $Ce_2Ni_7$-Kristallstruktur und/oder eine Kristallphase mit rhomboedrischer $Gd_2Co_7$-Kristallstruktur, wobei das Verhältnis des Gesamtgehalts der $Ce_2Ni_7$-K-ristallstruktur und der $Gd_2Co_7$-Kristallstruktur zwischen 97 Masse-% und 100 Masse-% beträgt und die wasserstoffabsorbierende Legierung durch die folgende allgemeine Formel (1) dargestellt ist:

$$M1_u Mg_v Ca_w M2_x Ni_y M3_z \ldots \qquad (1)$$

wobei M1 ein oder mehrere Elemente, ausgewählt aus der Gruppe Y, La, Ce, Pr, Nd und Sm, ist, und eines oder beide vorzugsweise La und Nd ist; M2 Ti oder Zr ist; M3 ein oder mehrere Elemente aus der Gruppe von Cr, Zn, Al, Co und Mn ist; wobei u, v, w, x, y und z Zahlen in Atomprozent sind, die die Bedingungen $u + v + w + x + y + z = 100$, $12 \leq u \leq 20$, $3.4 \leq v \leq 5.9$, $0.8 \leq w \leq 3.1$, $0 \leq x \leq 2$, $60 \leq y \leq 80$, $0 \leq z \leq 2$, $0 \leq (x+z) \leq 5$ und $3.2 \leq (y+z)/(u+v+w+x)$

$\leq$ 3.4 erfüllen.

2. Wasserstoffabsorbierende Legierung nach Anspruch 1, wobei w in der allgemeinen Formel (1) $0{,}93 \leq w \leq 3{,}1$ erfüllt.

3. Wasserstoffabsorbierende Legierung nach Anspruch 1, wobei w in der allgemeinen Formel (1) $0{,}93 \leq w \leq 3{,}0$ erfüllt.

4. Wasserstoffabsorbierende Legierung nach einem der Ansprüche 1 bis 3, wobei v in der allgemeinen Formel (1) $3{,}49 \leq v \leq 5{,}81$ erfüllt.

5. Wasserstoffabsorbierende Legierung nach einem der Ansprüche 1 bis 4, wobei x in der allgemeinen Formel (1) $0 \leq x \leq 0{,}2$ erfüllt.

6. Wasserstoffabsorbierende Legierung nach einem der Ansprüche 1 bis 5, wobei z in der allgemeinen Formel (1) $0 \leq z \leq 1{,}7$ erfüllt.

7. Wasserstoffabsorbierende Legierung nach einem der Ansprüche 1 bis 6, umfassend zwischen 4,7 Atom-% und 18,37 Atom-% an La.

8. Wasserstoffabsorbierende Legierung nach einem der Ansprüche 1 bis 7, umfassend Ce in einem Verhältnis zwischen 0 Atom-% und 2,3 Atom-%.

9. Wasserstoffabsorbierende Legierung nach einem der Ansprüche 1 bis 8, umfassend Al in einem Verhältnis zwischen 0 Atom-% und 0,6 Atom-%.

10. Wiederaufladbare Nickel-Metallhydrid-Batterie, mit einer negativen Elektrode, die die wasserstoffabsorbierende Legierung nach einem der Ansprüche 1 bis 9 enthält.


**Revendications**

1. Alliage absorbant l'hydrogène comprenant une phase cristalline comprenant une structure cristalline hexagonale de type $Ce_2Ni_7$ et/ou une phase cristalline comprenant une structure cristalline rhomboédrique de type $Gd_2Co_7$, le rapport de teneur totale de la structure cristalline de type $Ce_2Ni_7$ et de la structure cristalline de type $Gd_2Co_7$ étant de 97 % en masse ou plus et 100 % en masse ou moins, l'alliage absorbant l'hydrogène étant représenté par la formule générale suivante (1)

$$M1_u Mg_v Ca_w M2_x Ni_y M3_z \ldots \qquad (1)$$

dans laquelle M1 est un ou plusieurs éléments choisis dans le groupe constitué de Y, La, Ce, Pr, Nd et Sm, et est de préférence un ou les deux de La et Nd ; M2 est Ti ou Zr ; M3 est un ou plusieurs éléments choisis dans le groupe constitué de Cr, Zn, Al, Co et Mn ; u, v, w, x, y et z sont des nombres en % par atome, satisfaisant, $u + v + w + x + y + z = 100$, $12 \leq u \leq 20$, $3.4 \leq v \leq 5.9$, $0.8 \leq w \leq 3.1$, $0 \leq x \leq 2$, $60 \leq y \leq 80$, $0 \leq z \leq 2$, $0 \leq (x+z) \leq 5$ et $3.2 \leq (y+z)/(u+v+w+w+x) \leq 3.4$.

2. Alliage absorbant l'hydrogène selon la revendication 1, où w dans la formule générale (1) satisfait $0{,}93 \leq w \leq 3{,}1$.

3. Alliage absorbant l'hydrogène selon la revendication 1, où w dans la formule générale (1) satisfait $0{,}93 \leq w \leq 3{,}0$.

4. Alliage absorbant l'hydrogène selon l'une quelconque des revendications 1 à 3, où v dans la formule générale (1) satisfait $3{,}49 \leq v \leq 5{,}81$.

5. Alliage absorbant l'hydrogène selon l'une quelconque des revendications 1 à 4, où x dans la formule générale (1) satisfait $0 \leq x \leq 0{,}2$.

6. Alliage absorbant l'hydrogène selon l'une quelconque des revendications 1 à 5, où z dans la formule générale (1) satisfait $0 \leq z \leq 1{,}7$.

7. Alliage absorbant l'hydrogène selon l'une quelconque des revendications 1 à 6 comprenant 4,7% par atome ou plus et 18,37% par atome ou moins de La.

8. Alliage absorbant l'hydrogène selon l'une quelconque des revendications 1 à 7 comprenant du Ce dans un rapport de 0% par atome ou plus et 2,3% par atome ou moins.

9. Alliage absorbant l'hydrogène selon l'une quelconque des revendications 1 à 8 comprenant de l'Al dans un rapport de 0% par atome ou plus et 0,6% par atome ou moins.

10. Batterie rechargeable au nickel-hydrure métallique comprenant une électrode négative contenant l'alliage absorbant l'hydrogène selon l'une quelconque des revendications 1 à 9.

# Fig. 1

—O— Those with a B/A ratio of 3.3 and Mg of 4.65% by atom    —△— In case where those with Mg of less than 3.5% by atom
—□— In case where those with Mg of more than 5.8% by atom    —◇— In case where those with a B/A ratio of less than 3.2
—✕— In case where those with a B/A ratio of more than 3.4

# Fig. 2

# Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11217643 A
- EP 2214229 A
- WO 2007023901 A
- JP 2002105564 A
- US 2001041292 A